Europäisches Patentamt

European Patent Office

Office européen des brevets

(11) Publication number: **0 146 276**
A1

# EUROPEAN PATENT APPLICATION

(21) Application number: **84308077.1**

(22) Date of filing: **21.11.84**

(51) Int. Cl.⁴: **G 06 F 3/023,** **H 01 H 13/70**

(30) Priority: **21.11.83 GB 8331030**

(43) Date of publication of application: **26.06.85**
**Bulletin 85/26**

(84) Designated Contracting States: **DE FR GB NL**

(71) Applicant: **GEAC COMPUTERS LIMITED, Park
Lorne 111 Park Road Regents Park, London NW8 7JL
(GB)**

(72) Inventor: **Higgins, Stephen Edward, 36 Argyll Street,
London WCL (GB)**

(74) Representative: **Shindler, Nigel, BATCHELLOR, KIRK &
EYLES 2 Pear Tree Court Farringdon Road, London
EC1R 0DS (GB)**

(54) **Programmable computer keyboard.**

(57) A programmable keyboard comprising a plurality of key-
switch or equivalent devices each of which incorporates a
programmable display device so that the keyboard can be
programmed to generate desired signals from each key and
also to display an appropriate legend on the key.

## "Programmable Computer Keyboard"

This invention relates to data entry devices for computers, and in particular to keyboard devices. The word "computer" will be used herein to describe all types of data and word processing equipment, and the word "keyboard" is to be understood in its widest possible sense, that is to say in the sense of any device adapted for the manual input of data into such a system.

Conventional keyboards are generally provided with an array of key switch devices, each of which is adapted to generate a particular character or code, such as an "ASCII" character, when the key switch is depressed. When the keyboard is employed as part of a terminal device to a computer, the code may be generated from a read-only memory in the terminal device, or the device may be provided with a programmable memory, so that the code generated by each key can be controlled by the user.

Generally speaking, only a few of the keys in one particular row of the keyboard can be programmed in this way, and since conventional key caps are permanently engraved with legends respectively indicating the function of each key, it is necessary for the user to memorise the function which has been programmed into each key, or to change the key cap whenever the function is changed. Consequently, such programmable keyboards can be difficult to use in practice.

Recently, terminals have been developed which can be programmed to display function labels for the keys on a part of the VDU, or even on a small auxiliary display device on the keyboard itself, such as a liquid crystal display.

However, all of these known devices suffer from the disadvantage that it is necessary to allocate some space on the main display, or to enlarge the keyboard by providing an additional display on the keyboard, in order to accommodate the function labels.

Accordingly, the present invention seeks to provide a compact programmable keyboard which is so constructed as to allow individual key functions to be programmed, and also to allow suitable labels for the functions to be displayed. To this end, the present invention provides a key switch for a manual data input device, including an actuator part 6 adapted to generate an output and incorporating an integral display device which is programmable to display a legend indicative of the function of the key.

The invention also extends to an assembly of such key switches which are arranged in an array so as to form a keyboard. and memory means adapted to store a plurality of different sets of functions and corresponding legends for the keys of the keyboard, so as to provide various different keyboard layouts.

The invention also extends to a keyboard for manual input of data to a computer, comprising an array of programmable display devices and a flexible membrane overlay having a respective transparent contact portion overlying each display device whereby the application of pressure to the membrane over one of the display devices causes a corresponding signal to be generated by the keyboard.

Some embodiments of the invention will now be described by way of example, with reference to the accompanying drawings in which:

Figure 1 is a diagrammatic perspective view of a first type of key switch in accordance with the invention;

Figure 2 is a diagrammatic exploded view of part of a second type of key switch in accordance with the invention;

Figure 3 is a vertical cross section through a key switch array made up of elements of the type shown in Figure 2;

Figure 4 is a plan view of part of the array of Figure 3;

Figure 5 is a diagrammatic exploded view of a third type of key switch in accordance with the invention;

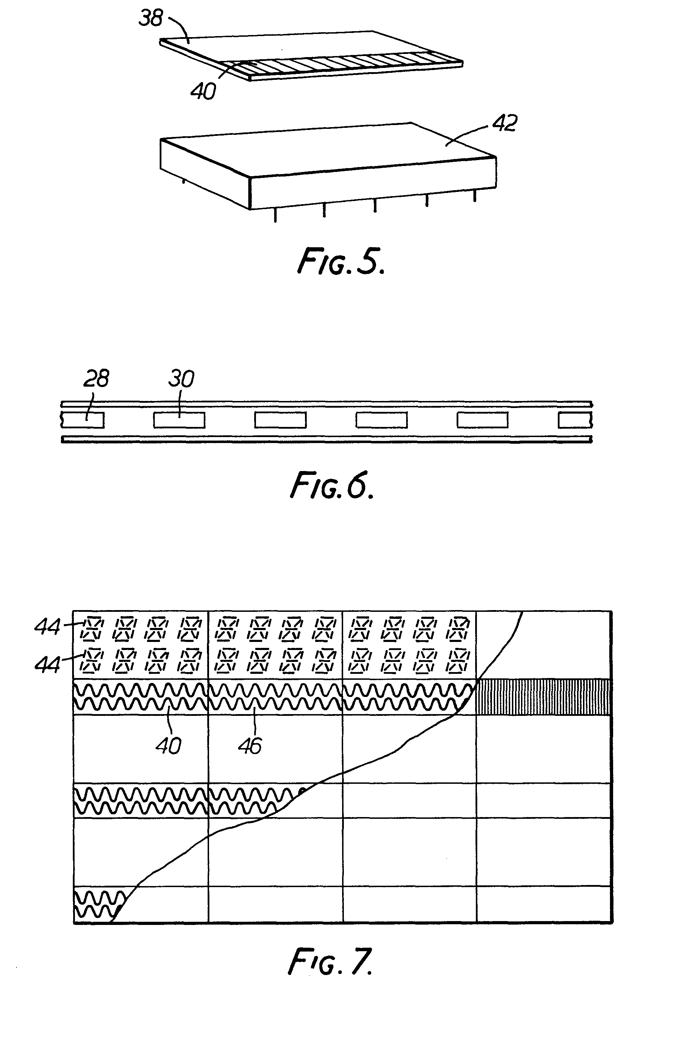

Figure 6 is a vertical cross section through an array of devices in accordance with Figure 5; and

Figure 7 is a plan view, partly broken away, of the array of Figure 6.

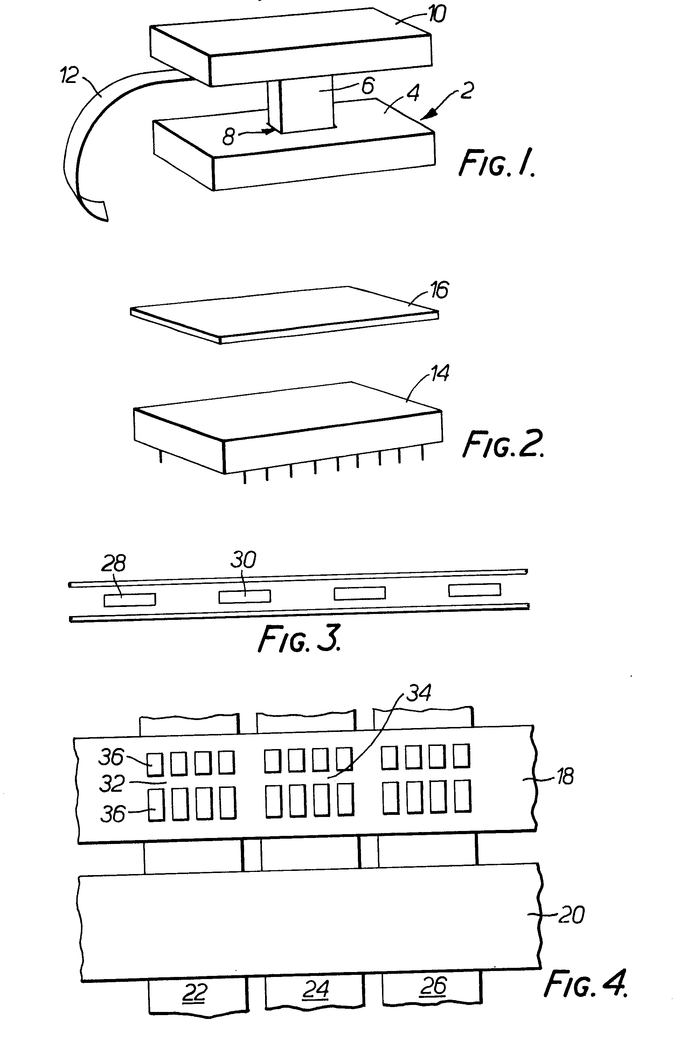

Referring firstly to Figure 1, this shows a conventional key switch device 2, including a fixed base 4 which is adapted to be attached to a motherboard, and a central upstanding pillar 6, slidable vertically in a socket 8 in the base, which normally carries an engraved key cap at its upper end. Depression of the key cap, and therefore the pillar 6, actuates the switch so as to provide an output from it.

In accordance with this embodiment of the invention, however, the normal plastic engraved key cap is replaced by a clip-on liquid crystal display unit 10, which is connected to the motherboard by means of a flexible connector 12. In this way, the key switch can be programmed so that, in addition to producing the defined function as an output when the key switch is depressed, it also displays on its upper surface, a legend indicating the nature of the function.

As an alternative to the use of conventional key switches, the invention also envisages the use of "membrane type" keyboards, comprising conductive layers.

In this type of arrangement, as shown in Figure 2, an LCD unit 14 to display a key legend is attached to a motherboard (not shown), and the transparent membrane switch 16 overlays it. As shown in Figures 3 and 4, such an arrangement comprises a series of parallel transparent strips 18, 20, etc, overlaying another series of parallel strips 22, 24, 26, etc which extend at right angles to the first set. Transparent spacers 28, 30, etc are provided between the "crossover" positions 32, 34, to keep the X and Y layers separated in between these areas, and in the crossover positions themselves, depression of the upper layer causes it to touch the lower layer, thus generating a coordinate indicating which switch has been actuated. The LCD unit 14 (Figure 2) provides a plurality of character displaying elements 36, enabling a particular legend to be programmed into the respective key area. Since the conductive layers 18, 20, and 22, 24, etc are transparent, these legends can be seen through them.

Figure 5 shows another alternative arrangement, which is generally similar to that of Figures 2 to 4, except that in this case the viewing area 38 for each key switch is separate from the actual contact area 40. The LCD unit 42, which provides the character display 44, is arranged beneath the top and bottom conductive layers comprising the X and Y elements of the matrix, in the same way as in Figures 2 to 4, but in this case the X and Y layers are only transparent in the area 38, and are formed with facing interdigitated contact areas 46, in the region 40. When an operator presses the key area, the interdigitated contact areas are brought into contact so as to produce an output from the switch.

## CLAIMS

1.      A key switch for a manual data input device, including an actuator part 6 adapted to generate an output and incorporating an integral display device (10) which is programmable to display a legend indicative of the function of the key.

2.      A key switch according to claim 1 including two relatively movable members, one of which forms a base (4) and is adapted to be mounted on a motherboard and the other of which forms a keytop, and a display device (10) which is mounted in the keytop and connected to the motherboard by a flexible connector (12).

3.      An assembly of key switches according to claim 1 or claim 2 which are arranged in an array so as to form a keyboard.

4.      A keyboard for manual input of data to a computer, comprising an array of programmable display devices (14) and a flexible membrane overlay (16) having a respective transparent contact portion overlying each display device whereby the application of pressure to the membrane over one of the display devices causes a corresponding signal to be generated by the keyboard.

5.      A keyboard according to claim 4 for manual input of data to a computer, comprising a motherboard, a plurality of display devices arranged in a regular matrix, a first set of parallel, conductive flexible strips (22, 24, 26) overlying the said matrix and extending in a first direction, and a second set of parallel, conductive flexible strips (18, 20) overlying the said first set and extending in a second direction at an angle to the first direction, and so arranged that each intersection (32, 34) of the strips overlies one of the said display devices, the said strips being transparent over at least part of each intersection and being normally resiliently spaced apart and being adapted to make electrical contact at regions of the intersections when pressure is applied to them.

6.    A keyboard according to claim 5 in which each said intersection comprises a transparent region (33) and a contact region (40).

7.    A keyboard according to claim 5 or claim 6 in which strips include interdigitated contact members on the mutually facing contact regions.

8.    A keyboard according to any of claims 3 to 7 further comprising memory means adapted to store a plurality of different sets of functions and corresponding legends for the keys of the keyboard, so as to provide various different keyboard layouts.

0146276

1/2

FIG. 1.

FIG. 2.

FIG. 3.

FIG. 4.

FIG.5.

FIG.6.

FIG.7.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | WO-A-8 303 159 (K. GRISSETT et al.) <br> * Page 1, lines 20-30; page 2, lines 9-12, 21-25; figure 1 * | 1-3,8 | G 06 F  3/023 <br> H 01 H  13/70 |
| X | IBM TECHNICAL DISCLOSURE BULLETIN, vol. 23, no. 3, August 1980, pages 1190-1193, New York, US; S.P. GHOSH et al.: "Electronically changeable keyboard key inscriptions" <br> * Page 1190, line 1 - page 1191, line 7 * | 1,3,8 | |
| X | IBM TECHNICAL DISCLOSURE BULLETIN, vol. 23, no. 10, March 1981, pages 4611-4613, New York, US; H.D. MAXEY: "Optically powered and controlled electronically alterable key labeling" <br> * Page 4611, line 1 - page 4612, line 10; figures * | 1-3 | |
| X | XEROX DISCLOSURE JOURNAL, vol. 5, no. 5, September/October 1980, page 559, Stamford, Connecticut, US; J.F. STEPHANY et al.: "Liquid crystal keyboard" <br> * Lines 16-23 * | 4,5,8 | |
| | --- | | |

TECHNICAL FIELDS SEARCHED (Int. Cl.4)

G 06 F  3/023
H 01 H  13/70

The present search report has been drawn up for all claims

| Place of search | Date of completion of the search | Examiner |
|---|---|---|
| THE HAGUE | 04-03-1985 | LECOMTE J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent Office

**EUROPEAN SEARCH REPORT**

0146276
.Application number

EP 84 30 8077

| | DOCUMENTS CONSIDERED TO BE RELEVANT | | | Page 2 |

| Category | Citation of document with indication, where appropriate, of relevant passages | Relevant to claim | CLASSIFICATION OF THE APPLICATION (Int. Cl.4) |
|---|---|---|---|
| X | US-A-4 078 257  (A.S. BAGLEY) <br> *  Column  2, lines 43-63; column 5, lines 30-52 * | 4,5,8 | |
| | --- | | |
| X | US-A-4 280 121  (G.J. CRASK) <br> *  Column  2, line 61 - column 3, line 21 * | 4,8 | |
| | ----- | | |
| | | | TECHNICAL FIELDS SEARCHED (Int. Cl.4) |

The present search report has been drawn up for all claims

| Place of search <br> THE HAGUE | Date of completion of the search <br> 04-03-1985 | Examiner <br> LECOMTE J.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82